# EUROPÄISCHE PATENTANMELDUNG

(11) **EP 3 389 297 A1**
(43) Veröffentlichungstag der Anmeldung: **17.10.2018**
(21) Anmeldenummer: 17166476.6
(22) Anmeldetag: 13.04.2017
(51) Int. Cl.: H04W 12/06, H04L 29/06, G06F 21/30

(54) **VERFAHREN UND DATENÜBERTRAGUNGSSYSTEM ZUM BESTIMMEN EINER SICHERHEITSKONFIGURATION**

(71) Anmelder: Siemens Aktiengesellschaft, 80333 München (DE)
(72) Erfinder: Aschauer, Hans, 81829 München (DE); Falk, Rainer, 85586 Poing (DE); Fischer, Kai, 85598 Baldham (DE); Fries, Steffen, 85598 Baldham (DE); Heintel, Markus, 81377 München (DE)

(57) **Zusammenfassung**

Die Erfindung betrifft ein Verfahren zum Bestimmen einer Sicherheitskonfiguration, aufweisend die Schritte Bereitstellen mindestens zweier unterschiedlicher Authentisierungsinformationen (32, 34, 42, 44, 52, 54) auf mindestens einer Vorrichtung (36, 46, 56) und Bestimmen der Sicherheitskonfiguration auf der mindestens einen Vorrichtung (36, 46, 56) in Abhängigkeit von einer Überprüfung der Gültigkeit der mindestens zwei unterschiedlichen Authentisierungsinformationen (32, 34, 42, 44, 52, 54). Ferner ist die Erfindung auf ein entsprechendes Datenübertragungssystem und Computerprogrammprodukt gerichtet.

## Beschreibung

### 1. Technisches Gebiet

Die vorliegende Erfindung betrifft ein Verfahren zum Bestimmen einer Sicherheitskonfiguration. Ferner ist die Erfindung auf ein entsprechendes Datenübertragungssystem und Computerprogrammprodukt gerichtet.

### 2. Stand der Technik

Zwischen mehreren miteinander kommunizierenden Kommunikationsgeräten, beispielsweise zwischen Datenverarbeitungs- und Steuerungsvorrichtungen in einem Automatisierungssystem in der Industrie, wird häufig eine sichere Datenübertragung benötigt, um Angriffe gegen die Informationssicherheit des Automatisierungssystems, beispielsweise eine Manipulation oder Ausspähung des Automatisierungssystems, abzuwehren. Solch eine sichere Datenübertragung kann durch ein sicheres Einrichten von miteinander kompatiblen Sicherheitskonfigurationen oder Sicherheitsinformationen auf die jeweiligen Kommunikationsgeräte erreicht werden.

In der DE 10 2010 031 931 A1 wird ein sicheres Einrichten einer drahtlosen Kommunikationseinrichtung beschrieben, in dem eine drahtlose Authentisierungseinrichtung eine Authentisierungsinformation an die drahtlose Kommunikationseinrichtung sendet, welche die Authentisierungsinformation an eine Basiseinrichtung weitersendet. Die Basiseinrichtung überprüft die erhaltene Authentisierungsinformation und bindet die drahtlose Kommunikationseinrichtung in Abhängigkeit des Ergebnisses der Überprüfung in ein Netzwerk ein.

In der DE 10 2005 045 118 B4 wird ferner ein Anmeldeverfahren zwischen Teilnehmern eines drahtlos arbeitenden Kommunikationssystems beschrieben, bei dem hochfrequente elektromagnetische Schlüsseletablierungssignale nach dem RFID-Standard ausgetauscht werden.

Ferner sind Verschlüsselungsprotokolle aus dem Stand der Technik bekannt. Beispielsweise ist die Transport Layer Security (TLS), auch als Secure Sockets Layer (SSL) bezeichnet, ein hybrides Verschlüsselungsprotokoll zur sicheren Datenübertragung im Internet. Bei dem TLS Handshake Protocol können zwei entfernte Kommunikationsgeräte Daten, insbesondere Sicherheitsparameter und Session-Schlüssel, über sogenannte Protokoll-Handshakes aushandeln. Nachteilig daran ist jedoch, dass bestimmte Sicherheitsparameter manuell konfiguriert werden müssen, wie symmetrische oder asymmetrische Schlüssel etc.

Die vorliegende Erfindung stellt sich daher die Aufgabe, ein verbessertes Verfahren zum Bestimmen einer Sicherheitskonfiguration bereitzustellen, welches einen erhöhten Schutz bietet, benutzerfreundlich, und effizient ist.

### 3. Zusammenfassung der Erfindung

Die oben genannte Aufgabe wird erfindungsgemäß durch ein Verfahren zum Bestimmen einer Sicherheitskonfiguration gelöst, aufweisend die Schritte:
a. Bereitstellen mindestens zweier unterschiedlicher Authentisierungsinformationen auf mindestens einer Vorrichtung,
b. Bestimmen der Sicherheitskonfiguration auf der mindestens einen Vorrichtung in Abhängigkeit von einer Überprüfung der Gültigkeit der mindestens zwei unterschiedlichen Authentisierungsinformationen.

Dementsprechend werden nach dem erfindungsgemäßen Verfahren in einem ersten Verfahrensschritt zwei oder mehrere unterschiedliche Authentisierungsinformationen bereitgestellt. Die Authentisierungsinformationen sind jeweils auf den Nachweis einer Instanz (Maschine, Person) bezüglich ihrer Identität gerichtet. Folglich wird sichergestellt, dass sie tatsächlich diejenige Instanz ist, die sie zu sein vorgibt. Die unterschiedlichen Arten der Authentisierungsinformationen werden im Folgenden genannt.

Die unterschiedlichen Authentisierungsinformationen können auf einer einzelnen Vorrichtung bereitgestellt werden oder auf zwei oder mehreren unterschiedlichen Vorrichtungen. Beispielsweise können die unterschiedlichen Authentisierungsinformationen durch einen oder mehrere Anwender auf mobilen Geräten, wie Smartphones, Tablets oder sonstigen stationären Geräten, wie PCs bereitgestellt werden.

Weiterhin wird die Sicherheitskonfiguration auf der einen oder den mehreren Vorrichtungen bestimmt. Die Bestimmung der Sicherheitskonfiguration berücksichtigt die bereitgestellten Authentisierungsinformationen. Zunächst werden die unterschiedlichen Authentisierungsinformationen auf Ihre Gültigkeit hin überprüft, mit anderen Worten, verifiziert. Falls die Überprüfung erfolgreich ist, wird die Sicherheitskonfiguration bestimmt oder eingerichtet.

Folglich sind die erfindungsgemäßen Verfahrensschritte weiteren Vorgängen, insbesondere der sicheren verschlüsselten Datenübertragung zwischen Vorrichtungen eines Datenübertragungssystems vorgeschaltet. Durch die Prüfung wird die Datensicherheit und Datenintegrität zusätzlich erhöht.

In einer Ausgestaltung sind mindestens der zwei Vorrichtungen entfernt voneinander angeordnet, in einem Kommunikationsnetzwerk angeordnet und/oder kommunizieren über das Internet miteinander. Dementsprechend kann eine Vielzahl von Vorrichtungen in einem Netzwerk organisiert sein, welche über das Internet miteinander Daten austauschen, auch über längere bzw. entfernte Distanzen. Bei den Vorrichtungen kann es sich um stationäre oder mobile Geräte handeln. Dadurch wird vorteilhafterweise eine effiziente Datenübertragung gewährleistet.

In einer weiteren Ausgestaltung weist eine Authentisierungsinformation ein Passwort, eine PIN, einen Hardware-Token, eine Biometrie, einen Fingerabdruck, eine Retina, einen Iris-Scan und/oder eine akustische Schädelknochen-Reflektion auf. Die Faktoren können unterschiedlich und flexibel ausgewählt werden oder auch kombiniert werden. Die zwei Authentisierungsinformationen können beispielsweise aus einem Passwort und einer Pin zusammengesetzt werden.

In einer weiteren Ausgestaltung geben mindestens zwei Anwender die mindestens zwei unterschiedlichen Authentisierungsinformationen auf der mindestens einen Vorrichtung ein. Dementsprechend kann ein einzelner Anwender die Authentisierungsinformationen beispielsweise durch Eingabefelder auf einer einzelnen Vorrichtung eingeben. Alternativ kann eine Mehrzahl von Anwendern jeweils eine oder mehrere Authentisierungsinformationen durch Eingabefelder auf jeweiligen Vorrichtungen eingeben. Die Authentisierungsinformationen unterscheiden sich voneinander, wie Passwort und PIN.

In einer weiteren Ausgestaltung werden die mindestens zwei unterschiedlichen Authentisierungsinformationen in einer bestimmten Reihenfolge bereitgestellt und/oder werden in einem bestimmten zeitlichen Mindestabstand voneinander bereitgestellt. Dementsprechend werden eine oder mehrere Randbedingungen eingehalten. Dabei wird vorteilhafterweise sichergestellt, dass die Authentisierungsinformationen in einer bestimmten Abfolge und/oder zeitlich versetzt voneinander bereitgestellt werden. Dadurch wird eine zu hohe Datenbelastung verhindert und folglich eine sichere Prüfung der Authentisierungsinformationen ermöglicht.

In einer weiteren Ausgestaltung weist die Sicherheitskonfiguration mindestens einen Schlüssel auf. Die Sicherheitskonfiguration, welche zur verschlüsselten Datenkommunikation bestimmt werden soll, weist dementsprechend einen Schlüssel (Key) auf. Neben dem Schlüssel kann die Sicherheitskonfiguration weitere Daten oder Informationen beinhalten.

In einer weiteren Ausgestaltung weist die Überprüfung der Gültigkeit der Authentisierungsinformationen weiterhin die Schritte auf:
- Überprüfen mindestens einer ersten Authentisierungsinformation mindestens einer ersten Vorrichtung mit mindestens einer Authentisierungsinformation mindestens einer zweiten Vorrichtung auf Übereinstimmung,
- Überprüfen mindestens einer zweiten Authentisierungsinformation der mindestens einen ersten Vorrichtung mit mindestens einer anderen Authentisierungsinformation der mindestens einen zweiten Vorrichtung auf Übereinstimmung.

Dementsprechend werden die unterschiedlichen Authentisierungsinformationen auf Ihre Gültigkeit hin überprüft. Die Authentisierungsinformationen einer einzelnen Vorrichtung oder mehrerer unterschiedlichen Vorrichtungen werden mit denjenigen Authentisierungsinformationen einer anderen Vorrichtung oder mehreren anderen Vorrichtungen verglichen und auf Übereinstimmung überprüft. Beispielsweise können die Authentisierungsinformationen der anderen Vorrichtung oder mehreren anderen Vorrichtungen zum Abgleich in einer Datenbank gespeichert werden.

Mit anderen Worten muss eine erste Authentisierungsinformation mit einer anderen Authentisierungsinformation übereinstimmen. Weiterhin muss eine zweite Authentisierungsinformation mit einer anderen Authentisierungsinformation übereinstimmen.

Beispielsweise gibt ein Anwender auf einer Vorrichtung zwei Authentisierungsinformationen, wie Passwort und PIN ein. Diese zwei Authentisierungsinformationen werden an eine andere Vorrichtung eines anderen Anwenders übertragen und von diesem bei Übereinstimmung bestätigt. Folglich muss das Passwort A1 des ersten Anwenders mit einem Passwort A1, ... ,An der Passwörter des anderen zweiten Anwenders übereinstimmen (A1 = A1). Gleiches gilt für die PIN (P1 = P1).

In einer anderen Ausgestaltung wird die Sicherheitskonfiguration durch den Diffie-Hellmann-Schlüsselaustausch bestimmt, falls jeweils eine Übereinstimmung vorliegt. Dementsprechend wird erst nach Feststellung oder Bestätigung der Gültigkeit der Authentisierungsinformationen, und somit jeweiligen Übereinstimmungen (A1 = A1 und P1 = P1), die Sicherheitskonfiguration bestimmt.

Mit anderen Worten, falls mindestens zwei Übereinstimmungen gegeben sind, sind die mindestens zwei Authentisierungsinformationen gültig und können zur weiteren Verwendung freigeben werden. In diesem Fall erfolgt die Bestimmung der Sicherheitskonfiguration.

Andernfalls, erfolgt keine Bestimmung der Sicherheitskonfiguration. Sondern die beiden Verfahrensschritte werden wiederholt oder es findet eine andere Fehlerkorrektur oder Fehlersuche etc. statt. Folglich wird vorteilhafterweise die Sicherheitskonfiguration erst nach dieser zusätzlichen Verifikation eingerichtet und später für die sichere Datenkommunikation verwendet. Vorteilhafterweise findet vorher keine verschlüsselte Datenkommunikation zwischen den Vorrichtungen statt.

In einer weiteren Ausgestaltung weist das Bereitstellen der mindestens zwei unterschiedlichen Authentisierungsinformationen den Schritt auf:
Erstellen einer kombinierten Authentisierungsinformation aus den mindestens zwei unterschiedlichen Authentisierungsinformationen vor Schritt b. zur weiteren Verwendung der kombinierten Authentisierungsinformation in Schritt b.

In einer weiteren Ausgestaltung weist das Verfahren weiterhin einen oder mehrere der Schritte auf:
c. Bestätigen der Sicherheitskonfiguration bevor eine Datenverbindung zwischen den mindestens zwei Vorrichtungen basierend auf der Sicherheitskonfiguration kryptographisch geschützt hergestellt wird;
d. Senden mindestens einer Nachricht von mindestens einer Vorrichtung der mindestens zwei Vorrichtungen an mindestens eine andere Vorrichtung der mindestens zwei Vorrichtungen, wobei die mindestens eine Nachricht Informationen über die Bestätigung und/oder den Verbindungsaufbau angibt.

Die Erfindung betrifft ferner ein Datenübertragungssystem, aufweisend: mindestens zwei Vorrichtungen zum Durchführen des oben beschriebenen Verfahrens.

Die Erfindung betrifft ferner ein Computerprogrammprodukt mit einem Computerprogramm, das Mittel zur Durchführung des oben beschriebenen Verfahrens aufweist, wenn das Computerprogramm auf einer programmgesteuerten Einrichtung zur Ausführung gebracht wird.

Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen. Als programmgesteuerte Einrichtung kommt insbesondere eine Steuereinrichtung, wie beispielsweise eine Industriesteuerungs-PC oder eine Speicherprogrammierbare Steuerung oder ein Programmable Logic Controller, kurz PLC, oder ein Mikroprozessor für eine Smartcard oder dergleichen in Frage.

### 4. Kurze Beschreibung der Zeichnungen

In der folgenden detaillierten Beschreibung werden vorliegend bevorzugte Ausführungsformen der Erfindung weiter beschrieben mit Bezug auf die folgenden Figuren.
- Fig. 1: zeigt ein Datenübertragungssystem gemäß einer Ausführungsform der Erfindung.
- Fig. 2: zeigt ein beispielhaftes Anwendungsscenario zum Bestimmen einer Sicherheitskonfiguration gemäß einer weiteren Ausführungsform der Erfindung.

### 5. Beschreibung der bevorzugten Ausführungsformen

Im Folgenden werden bevorzugte Ausführungsformen der vorliegenden Erfindung in Bezug auf die Figuren beschrieben.

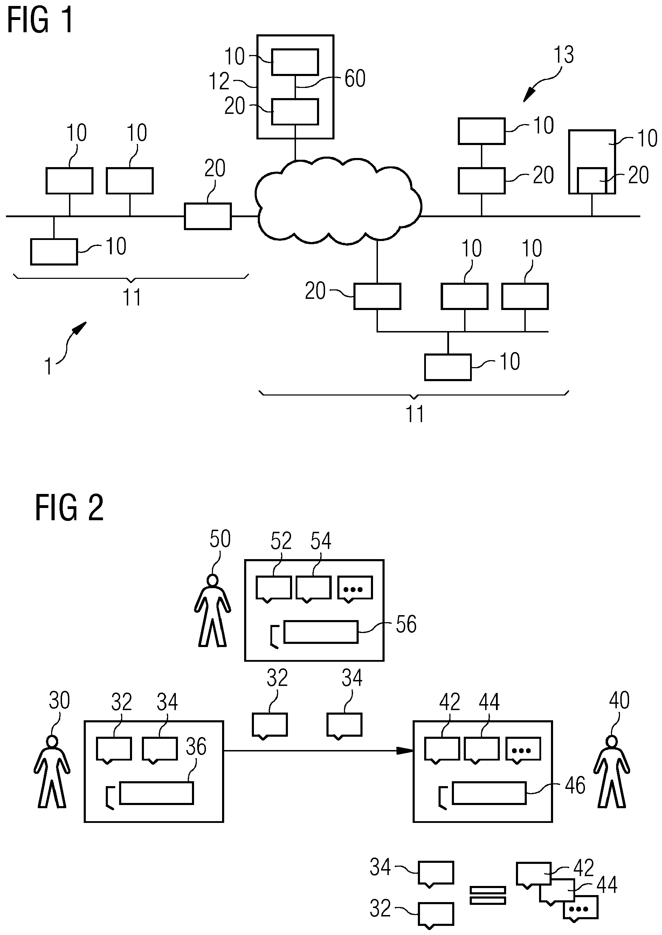

Fig. 1 zeigt ein Datenübertragungssystem 1 gemäß einer Ausführungsform der Erfindung. Das Datenübertragungssystem 1 ist beispielsweise ein Automatisierungssystem 1, welches ein oder mehrere Feldgeräte 10 aufweist. Die Feldgeräte 10 können Sicherheits-Gateways 20 aufweisen. Die Sicherheits-Gateways 20 können als Kommunikationsmodul, Einsteckkarte, Schnittstelle oder integrierte Funktionalität etc. ausgebildet sein. Sie können einem Netzwerk oder einer Vorrichtung, wie einem Feldgerät 10, zugeordnet sein oder sie können als Einheiten in diese integriert sein. Bei den Feldgeräten 10 kann es sich beispielsweise um Maschinen handeln, die ein Produkt herstellen.

Die genannten Einheiten 10, 20 können ferner in Netzwerken angeordnet sein. Das Datenübertragungssystem 1 nach Fig. 1 weist beispielhaft zwei Automatisierungsnetze 11, 11, einen Backend-Dienst 12 und zwei IoT-Vorrichtungen 13, 13 auf. Der Backend-Dienst 12 kann beispielsweise als Datenbank ausgebildet sein.

Die Datenübertragung bzw. Datenkommunikation zwischen den Automatisierungsnetzen 11, zwischen einem Automatisierungsnetz 11 und einem Backend-Dienst oder einer IoT-Vorrichtung etc. erfolgt über das Internet 60. Die Kommunikation ist dabei vorzugsweise kryptographisch geschützt. Beispielsweise wird die Integrität von Datenpaketen oder Steuernachrichten durch eine kryptographische Prüfsumme geschützt. Weiterhin wird beispielsweise der Dateninhalt zumindest teilweise verschlüsselt. Der kryptographische Schutz kann über die Sicherheits-Gateways 20 erfolgen.

Das Automatisierungssystem 1 ist dazu eingerichtet, ein Verfahren zum Bestimmen einer Sicherheitskonfiguration durchzuführen. Solch ein Verfahren wird insbesondere in der Fig. 2 anhand eines beispielhaften Anwendungsscenarios gezeigt. Das Verfahren kann auch als Anlernvorgang bezeichnet werden.

In einem ersten Schritt erfolgt eine Mehrfaktor-Authentisierung. Dementsprechend werden zwei oder mehrere unterschiedliche Authentisierungsinformationen 32, 34, 42, 44, 52, 54 zwischen zwei oder mehreren Vorrichtungen 36, 46, 56 ausgetauscht. Diese Authentisierungsinformationen sind kryptographisch geschützt. Hierzu kann beispielsweise ein nichtauthentisierter TLS-Kommunikationskanal oder ein SRP-Protokoll verwendet werden. Die Kommunikation kann im Gegensatz zu Lösungen aus dem Stand der Technik für WLAN oder Bluetooth über ein Kommunikationsnetzwerk, wie IP-Netzwerk oder Telekommunikationsnetzwerk erfolgen.

Ferner kann beispielsweise eine Mehrzahl von Nutzern oder Anwendern 30, 40, 50 involviert sein, wie in Fig. 2 dargestellt. Dementsprechend kann jeder Anwender 30, 40, 50 aus der Mehrzahl der Anwender jeweils mindestens eine Authentisierungsinformation 32, 34, 42, 44, 52, 54 eingeben. Dadurch wird vorteilhafterweise erreicht, dass nicht ein Anwender 30 alleine eine Vorrichtung anlernen kann. Alternativ können die mindestens zwei unterschiedlichen oder unabhängigen Authentisierungsinformationen 32, 34, 42, 44, 52, 54 auch von einem einzelnen Anwender 30, 40, 50 eingegeben werden.

Die Authentisierungsinformationen 32, 34, 42, 44, 52, 54 können auch als Faktoren oder Sicherheitsparameter bezeichnet werden. Hierbei können die Authentisierungsinformationen 32, 34, 42, 44, 52, 54 unterschiedliche Arten unterstützen, umfassend ein Passwort, eine PIN, ein Hardware-Token, eine Biometrie, einen Schlüssel, einen Benutzernamen, ein Kennwort, eine Transaktionsnummer, ein Fingerabdruck etc. Beispielsweise kann es in einem Anwendungsscenario erforderlich sein, einen Faktor durch einen Anwender 30, 40, 50 einzugeben und durch ein Zusatzgerät (Token) bereitzustellen oder zu prüfen.

Die Eingabe kann durch entsprechende Eingabefelder von Eingabevorrichtungen 36, 46, 56 oder durch sonstige Vorrichtungen erfolgen, beispielsweise Smartphones oder Tablets. Die Nutzerinteraktion erfolgt auf den Eingabevorrichtungen 36, 46, 56 vorteilhafterweise auch zeitlich entkoppelt. Mit anderen Worten, können die Authentisierungsinformationen 32, 34, 42, 44, 52, 54 zu unterschiedlichen Zeitpunkten durch die Anwender 30, 40, 50 eingegeben werden. Ferner kann ein zeitlicher Mindestabstand als eine Randbedingung zwischen den Eingaben eingehalten werden. Dementsprechend ist die Eingabe einer nachfolgenden Authentisierungsinformation erst nach einem vorgegebenen zeitlichen Abstand von einer vorherigen Authentisierungsinformation möglich. Alternativ oder zusätzlich kann auch eine Reihenfolge der Eingaben als weitere Randbedingung vorbestimmt werden.

Die eingegebenen mindestens zwei Authentisierungsinformationen 32, 34, 42, 44, 52, 54 der Anwender 30, 40, 50 werden daraufhin auf Übereinstimmung mit den weiteren oder anderen Authentisierungsinformationen 32, 34, 42, 44, 52, 54 der anderen Anwender 30, 40, 50 überprüft.

Beispielsweise gibt ein erster Anwender 30 ein Passwort und eine PIN als zwei unterschiedliche Authentisierungsinformationen 32, 34 in sein Smartphone oder eine andere Vorrichtung 36 ein, wie in Fig. 2 dargestellt. Diese zwei Authentisierungsinformationen 32, 34 werden an eine andere Vorrichtung oder mehrere andere Vorrichtungen 46, 56 eines anderen Anwenders oder anderen Anwendern 40, 50 übertragen. Der andere zweite Anwender 40 überprüft gemäß Fig. 2 nach Empfang dieser Authentisierungsinformationen 32, 34 deren Gültigkeit. Die Gültigkeit kann dadurch überprüft werden, dass diese Authentisierungsinformationen 32, 34 mit Authentisierungsinformationen auf der Vorrichtung 46 des zweiten Anwenders 40 abgeglichen werden. Die Authentisierungsinformationen können beispielsweise in einer Datenbank in der Vorrichtung 46 gespeichert sein. Der Vergleich der Authentisierungsinformationen 32, 34 ist in Fig. 2 mit einem Istgleichzeichen angedeutet.

Bei Übereinstimmung und dementsprechend keiner Abweichung der Authentisierungsinformationen 32, 34 eines Anwenders 30 von denjenigen eines anderen Anwenders 40, erfolgt das Bestimmen der Sicherheitskonfiguration in einem weiteren zweiten Schritt. Hierbei kann beispielsweise der Diffie-Hellmann-Schlüsselaustausch verwendet werden. Die zwei Vorrichtungen 36, 46 vereinbaren dementsprechend nach dem ersten Schritt einen Schlüssel als Sicherheitskonfiguration gemäß dem Protokoll.

Weiterhin kann die Sicherheitskonfiguration anschließend freigegeben oder bestätigt werden, bevor sie aktiviert bzw. für die Datenkommunikation verwendet wird. Beispielsweise kann durch einen Sicherheitsadministrator oder anderen Anwender 30, 40, 50 auf einer Vorrichtung 36, 46, 56 eine oder mehrere Bestätigungsinformationen eingeben werden. Ferner können weitere Sicherheitsinformationen bereitgestellt oder Nachrichten eingegeben und/oder übertragen werden. Die Nachrichten können darauf gerichtet sein, dass die Sicherheitskonfiguration freigegeben wurde, die Kommunikationsverbindung hergestellt werden kann oder hergestellt wurde etc. Ferner kann eine Sicherheitsinformation, wie Identifizierungsinformation, in Abhängigkeit von der Sicherheitskonfiguration ermittelt und bereitgestellt werden. Diese Identifizierungsinformation kann in einen Audit-Datensatz oder in Log-Daten eingetragen werden. Ferner kann die Sicherheitskonfiguration und/oder die weiteren Sicherheitsinformationen während des Betriebs eines oder mehrere Vorrichtungen regelmäßig zwischen den Vorrichtungen ausgetauscht werden, um Änderungen der Sicherheitskonfiguration automatisiert zu entdecken.

## Patentansprüche

1. Verfahren zum Bestimmen einer Sicherheitskonfiguration, aufweisend die Schritte:
a. Bereitstellen mindestens zweier unterschiedlicher Authentisierungsinformationen (32, 34, 42, 44, 52, 54) auf mindestens einer Vorrichtung (36, 46, 56),
b. Bestimmen der Sicherheitskonfiguration auf der mindestens einen Vorrichtung (36, 46, 56) in Abhängigkeit von einer Überprüfung der Gültigkeit der mindestens zwei unterschiedlichen Authentisierungsinformationen (32, 34, 42, 44, 52, 54).

2. Verfahren nach Anspruch 1, wobei mindestens zwei der Vorrichtungen (36, 46, 56) entfernt voneinander angeordnet sind, in einem Kommunikationsnetzwerk angeordnet sind und/oder über das Internet (60) miteinander kommunizieren.

3. Verfahren nach Anspruch 1 oder Anspruch 2, wobei eine Authentisierungsinformation (32, 34, 42, 44, 52, 54) ein Passwort, eine PIN, einen Hardware-Token, eine Biometrie, einen Fingerabdruck, eine Retina, einen Iris-Scan und/oder eine akustische Schädelknochen-Reflektion aufweist.

4. Verfahren nach einem der vorhergehenden Ansprüche, wobei mindestens zwei Anwender (30, 40, 50) die mindestens zwei unterschiedlichen Authentisierungsinformationen (32, 34, 42, 44, 52, 54) auf der mindestens einen Vorrichtung (36, 46, 56) eingeben.

5. Verfahren nach einem der vorhergehenden Ansprüche, wobei die mindestens zwei unterschiedlichen Authentisierungsinformationen (32, 34, 42, 44, 52, 54) in einer bestimmten Reihenfolge bereitgestellt werden und/oder in einem bestimmten zeitlichen Mindestabstand voneinander bereitgestellt werden.

6. Verfahren nach einem der vorhergehenden Ansprüche, wobei die Sicherheitskonfiguration mindestens einen Schlüssel aufweist.

7. Verfahren nach einem der vorhergehenden Ansprüche, wobei die Überprüfung der Gültigkeit der Authentisierungsinformationen weiterhin die Schritte aufweist:
- Überprüfen mindestens einer ersten Authentisierungsinformation (32) mindestens einer ersten Vorrichtung (36) mit mindestens einer Authentisierungsinformation (42) mindestens einer zweiten Vorrichtung (46) auf Übereinstimmung,
- Überprüfen mindestens einer zweiten Authentisierungsinformation (34) der mindestens einen ersten Vorrichtung (36) mit mindestens einer anderen Authentisierungsinformation (44) der mindestens einen zweiten Vorrichtung (46) auf Übereinstimmung.

8. Verfahren nach Anspruch 6 und Anspruch 7, wobei die Sicherheitskonfiguration durch den Diffie-Hellmann-Schlüsselaustausch bestimmt wird, falls jeweils eine Übereinstimmung vorliegt.

9. Verfahren nach einem der vorhergehenden Ansprüche, wobei das Bereitstellen der mindestens zwei unterschiedlichen Authentisierungsinformationen (32, 34, 42, 44, 52, 54) den Schritt aufweist:
Erstellen einer kombinierten Authentisierungsinformation aus den mindestens zwei unterschiedlichen Authentisierungsinformationen (32, 34, 42, 44, 52, 54) vor Schritt b. zur weiteren Verwendung in Schritt b.

10. Verfahren nach einem der vorhergehenden Ansprüche, weiterhin aufweisend einen oder mehrere der Schritte:
c. Bestätigen der Sicherheitskonfiguration bevor eine Datenverbindung zwischen den mindestens zwei Vorrichtungen (36, 46, 56) basierend auf der Sicherheitskonfiguration kryptographisch geschützt hergestellt wird, und/oder
d. Senden mindestens einer Nachricht von mindestens einer Vorrichtung der mindestens zwei Vorrichtungen (36, 46, 56) an mindestens eine andere Vorrichtung der mindestens zwei Vorrichtungen (36, 46, 56), wobei die mindestens eine Nachricht Informationen über die Bestätigung und/oder den Verbindungsaufbau angibt.

11. Datenübertragungssystem, aufweisend: mindestens zwei Vorrichtungen (36, 46, 56) zum Durchführen des Verfahrens nach einem der vorhergehenden Ansprüche 1 bis 10.

12. Datenübertragungssystem nach Anspruch 1, wobei mindestens zwei Vorrichtungen (36, 46, 56) entfernt voneinander angeordnet sind, in einem Kommunikationsnetzwerk angeordnet sind und/oder über das Internet (60) miteinander kommunizieren.

13. Computerprogrammprodukt mit einem Computerprogramm, das Mittel zur Durchführung des Verfahrens nach einem der Ansprüche 1 bis 10 aufweist, wenn das Computerprogramm auf einer programmgesteuerten Einrichtung zur Ausführung gebracht wird.
